Europäisches Patentamt

European Patent Office

Office européen des brevets

(11) Publication number: **0 293 234 B1**

# EUROPEAN PATENT SPECIFICATION

(45) Date of publication of patent specification: **19.11.92**   (51) Int. Cl.⁵: **B29B 7/48**

(21) Application number: **88304844.9**

(22) Date of filing: **27.05.88**

(54) **High shear mixing.**

(30) Priority: **28.05.87 GB 8712545**

(43) Date of publication of application:
**30.11.88 Bulletin 88/48**

(45) Publication of the grant of the patent:
**19.11.92 Bulletin 92/47**

(84) Designated Contracting States:
**CH DE ES FR GB IT LI NL SE**

(56) References cited:
**DE-A- 3 627 974**
**DE-C- 518 200**
**FR-A- 1 287 425**
**GB-A- 865 127**

(72) Inventor: **Adams, Michael John, Dr.**
**28 Berwick Road**
**Little Sutton Cheshire L66 4TR(GB)**
Inventor: **Edmondson, Brian**
**42 Hampton Crescent Neston**
**South Wirral Cheshire L64 0TP(GB)**
Inventor: **Edwards, Richard Barrie**
**Treeview Cedar Way**
**Gayton Wirral L60 3RH(GB)**
Inventor: **Irving, Graeme Neil, Dr.**
**14 Kirket Close**
**Bebington Wirral L63 3DL(GB)**
Inventor: **Lin, Sin Yau**
**16 Jalan Sappan**
**Singapore 2057(SG)**

(73) Proprietor: **UNILEVER PLC**
**Unilever House Blackfriars P.O. Box 68**
**London EC4P 4BO(GB)**
(84) Designated Contracting States:
**GB**

(73) Proprietor: **UNILEVER N.V.**
**Burgemeester s'Jacobplein 1 P.O. Box 760**
**NL-3000 DK Rotterdam(NL)**
(84) Designated Contracting States:
**CH DE ES FR IT LI NL SE**

(74) Representative: **Rogers, John Edward et al**
**UNILEVER PLC Patent Division Colworth**
**House Sharnbrook**
**GB-Bedford MK44 1LO(GB)**

EP 0 293 234 B1

## Description

This invention relates to a process and apparatus for high shear mixing and processing and particularly to the mixing and processing of viscous materials, or materials which become viscous on processing, so that laminar flow predominates, according to the preambles of the independent claims.

A type of known mixing apparatus is the twin screw mixer which normally has casing defining two overlapping parallel cylindrical bores each containing a rotor shaft having a plurality of mixing elements thereon. One such mixing apparatus as described in US Patent No. 3 042 264 for mixing together as needed two pumpable components has a plurality of vane means on each shaft, the vanes on one shaft overlapping and being interposed between vanes on the other shaft and having an outside diameter slightly less than the inside diameter of the bore of the casing, each of the vanes having openings therethrough some of which are formed as notches which extend from adjacent the shaft to the circumferential periphery of the vanes and are disposed to impel the components from the inlet towards the outlet of the mixer. This mixing apparatus is distinguished from the apparatus of the present invention as set out in the claims of the present specification.

Another known mixing apparatus is described in GB Patent No. 1264415 in which flow control means is provided in a twin screw machine by interposing flanged members between sections of screw on the rotor shafts. The flanged members of each shaft intermesh and are provided with circumferentially spaced gaps or openings interrupting the peripheries of the flanged members.

A further continuous treatment apparatus is described in GB patent No 1305142 in which overlapping thin discs arranged alternately on twin rotors are provided with notches in their peripheries and with scraping and agitator blades which enter the notches of the discs on the opposite shaft as the shafts rotate each at the same speed. Because the thin discs are spaced relatively widely apart the majority of the flow through the apparatus is not through the notches in the disc and the material in the notches is subjected to agitation so that the flow fields are not well controlled.

It is also known from US Patent No. 3 497 912 to provide a continuous mixing apparatus for mixing solid and liquid constituents of a built synthetic detergent bar of the twin screw extruder type in which paddles or kneading blocks as well as feed screw elements are provided on the rotor shafts. An alternative form of such kneading blocks is shown in US 3 764 114 for use in the continuous production of soap.

We have found that mixing with such twin screw mixers can prove insufficient so that distinct undispersed particles and agglomerates of material remain visible in the mixed material. Inhomogeneous mixing can also be exemplified by an incomplete chemical reaction between two or more components of the material as it passes through the mixer, variation in texture of the material leaving mixer, and deterioration in mechanical strength of the product of the mixer even though the material leaving the mixer appears to the eye to be thoroughly mixed.

We have found that it is possible to achieve an improvement on the degree of mixing achieved by the above mentioned known twin screw mixers.

According to the present invention there is provided a process of mixing material in which the material is passed through a housing closely fitting a plurality of circular mixing elements arranged in interengaging and overlapping relationship on two driven parallel rotor shafts, each of the mixing elements having openings therethrough, the material passing through the housing in the longitudinal direction of the shafts with the majority of the material passing through the openings characterised in that the openings comprise apertures within which a slug of material is formed by the passage of the material therethrough, at least part of which slug is not affected by the shear conditions existing at the faces of the elements.

Material can pass through the mixer by any one of three different routes. It can leak axially past the mixing elements through the small clearance necessarily existing between the mixing elements and the bore of the housing. It can flow transversely to the axial direction of the mixer through gaps existing between overlapping areas of adjacent mixing elements and it can flow in a generally axial direction passing through the apertures. The planes of the shear fields in the leakage and transverse flows are parallel to the moving surfaces creating these shear fields and in the direction of the respective flows. When these flows are non-Newtonian the rate of the shear at different planes varies so that the application of shear is uneven accross the flow. Since the flow through the apertures is across, ie. essentially at right angles to, the shear fields created at the face of the missing element, the flow which passes through the apertures all passes through the same high shear fields and is therefore more consistently mixed to a predetermined extent. As the material enters and leaves the apertures it is subjected to high shear, that material farthest from the axis of rotation of the mixing element being subjected to the greatest shear. The flow through the apertures is however also subjected to distributive mixing. Some of the material leaving the apertures of a first mixing element will leave those apertures in the region of the overlap with a second mixing element of the other rotor. In this case the material tends to be deposited into the apertures of the second mixing element so that the material which was nearest the axis of rotation of the first mixing element is now farthest from the axis of rotation of the second mixing element.

Thus, as well as the distributive effect of the apertures, it is also ensured that all the material in turn is subjected to the maximum high shear and dispersive mixing.

It has been found that when the flow of material through the mixer is principally in the axial direction of the rotors and passes through the apertures in the mixing elements, then the best mixing is accomplished when the flow of material is fully developed within the apertures, that is to say at least a part of the length of the slug of material within the apertures is not affected by the conditions existing outside of the aperture. Clearly then the size of the slug, and its length compared to the cross-sectional area, more particularly its length compared to the circumferential dimension, for flow to be fully developed in the aperture will depend upon the viscosity of the material. The circumferential dimension of an aperture is the maximum width of the aperture in the circumferential direction of the mixing element.

As the viscosity of the material drops the length of the slug, and particularly its length as compared to its cross-sectional area, will have to increase in order that a part of the length of the slug is unaffected by the conditions existing outside the aperture. We have found that the apertures are preferably formed by holes having a length to circumferential dimension ratio equal to or greater than 0.03 times the Reynolds number of the material being mixed. This ensures that the flow is fully developed in the apertures as aforesaid.

This invention is particularly suitable for highly non- newtonian fluids such as those having a power law index less than 0.7.

The process of the present invention is particularly suitable for the mixing of ingredients to form a built non-soap detergent bar. Commercial built detergent bar compositions contain non-soap detergent active and detergent builder materials together with optional components, for example abrasives, fillers, perfumes, alkaline salts, eg silicates and bleaching agents. Particles of builder salts and/or filler may require to be broken up as well as distributed within and throughout the mixture.

The process of treating material in a mixer as set forth above may be a process including a chemical reaction carried out under conditions of shear. Chemical reactions are usually required to be performed in conditions controlled as to a number of parameters, such as temperature, pressure, mass, momentum, energy transfer. The provision of a chemical reactor capable of efficiently satisfying all requirements is frequently difficult, particularly in a continuous operation. The process of the invention can be used for carrying out a chemical reaction in which at least two reactants are supplied to a mixer and mixed as aforesaid. This can drive the reaction towards completion and reduce the time required for all or the majority of the reaction in the neutralisation of the acid form of a detergent active with alkali metal carbonate to give a viscous paste, the process of the present invention enabling such a process to be effected efficiently and continuously without any, or minimal, pre-mixing of the constituents and/or substantial completion of the reaction before the material leaves the mixer. Thus the process of the invention can be advantageously used to mix at least some of the constituents of a built detergent bar in which at least a non-soap detergent active in acid form and neutralising agent are mixed to have less than 0.7 parts free acid and less than 22 parts moisture per 100 parts of detergent active. Preferably the materials added to the mixer comprise less than 22 parts water per 100 parts detergent active.

When a process entails the liberation of gas the mixing elements provide a seal against backflow of gas to the inlet region of the mixer which can be helpful in preventing any water vapour entrained with such gas causing caking of solid feeds at an inlet.

According to another aspect of the present invention there is provided a non-conveying mixer for mixing viscous material or materials which become viscous on processing, comprising a casing having an inlet and an outlet, the casing defining two parallel overlapping bores, a driven rotor shaft co-axial with each bore, each rotor being provided with a plurality of circular elements axially spaced along the shaft and closely surrounded by the bores of the casing, the elements on one shaft alternating with the elements on the other shaft with an axial gap between adjacent faces of overlapping elements, each of the elements having a plurality of apertures extending axially therethrough forming the principal flow path through the mixer from the inlet to the outlet, the apertures in each of the elements being spaced from the periphery of the elements and having a length/circumferential dimension ratio of between 0.5 and 9. In such a mixer transfer of material into and out of the apertures subjects the material to shear in the immediate vicinity of the mixing elements where the intensity of shear is greatest even for a material with non-Newtonian rheology. Thus dispersive mixing is accomplished by shearing action and entrainment of material in the apertures divides the flow of material and effects bodily transfer of the material in the apertures so that there is also distributive mixing. That the apertures have a length/circumferential dimension in the specified range ensures that when the mixer is used for mixing materials which are difficult to mix, ie viscous materials having a Reynolds number of 300 or less, or which develop such a viscosity during mixing, the flow through the apertures is fully developed and does not simply flow through the apertures at a rate such that the benefits of the dispersive and distributive mixing are not achieved.

The three possible routes or flows through such a mixer are through the apertures ($Q_a$) transversely between overlapping areas of the mixing elements ($Q_t$) and axial leakage between the peripheries of the mixing elements and the bore of the casing ($Q_1$).

For example, in the case of a Newtonian fluid and cylindrical apertures in the mixing elements these flows can be represented by the following equations:

$$Q_a = C_a \frac{\Delta P}{n} \quad \text{where} \quad C_a = \pi \frac{MB^4}{128L_a}$$

$$Q_1 = C_1 \frac{\Delta P}{n} \quad \text{where} \quad C_1 = \pi \frac{FR^4}{4L_1} \left[ (1-K^4) - \frac{(1-K^2)^2}{\ln \frac{1}{k}} \right]$$

$$Q_t = C_t \frac{\Delta P}{n} \quad \text{where} \quad C_t = \frac{WH^3}{12L_t}$$

where
$P$ = Pressure drop across one set of mixing elements
$M$ = Number of apertures per element
$B$ = Circumferential dimension of the apertures
$L$ = Length of aperture or width of element in axial direction
$L_a$ = $L + 0.3B$
$F$ =

$$1 - \pi^{-1} \cos^{-1}\left( \frac{C}{2KR} \right)$$

$C$ = Distance between axes of rotor shafts
$K$ = Ratio of radius of element to radius of bore of casing
$R$ = Radius of bore of casing
$L_1$ = $L + 0.3R(1-K)$
$W$ = $[(2KR)^2 - C^2]^{\frac{1}{2}}$
$H$ = Gap between adjacent overlapping elements
$L_t$ =

$$KR - \frac{C}{2} + 0.3H$$

$n$ = Viscosity of the material

It can be seen that for a given mixer the values for C and R are fixed. The value for K is determined by the necessary mechanical clearances and hence the values for F and W. Thus for a given pressure drop and viscosity of material the variables remaining are M, B, L and H. Furthermore, the criterion for fully developed flow the material in the apertures met when

$\frac{L}{B}$ > 0.03 x Reynolds No. of material

Thus the number and size of the apertures together with the gap between elements can be calculated to provide that substantially all the flow through the mixers passes through the apertures.

The mixing elements will generally be discs having planer faces perpendicular to the axial direction of

4

the rotor but elements having conical faces or non-planar side surfaces are also possible. The rotors can be contra-rotating but are preferably co-rotating to maximise the shear applied to the transverse flow $Q_t$.

The mixer according to the invention is non-conveying and can be fed by some kind of pump. Preferably, however, the mixer is fed by a twin screw extruder having conveying elements. Thus a twin screw extruder can be provided with conveying elements and one or more mixing sections comprising mixing elements according to the invention. As well as providing efficient mixing the mixing elements serve to retard the flow from the conveying sections of the extruder, thereby increasing the residence time of the material, and also increase backflow which helps to minimise any variations arising from irregularities in the feeding of material to the extruder. Increased residence time facilitates heat transfer to or from the material in the extruder, if required.

Further embodiments of the invention are defined in the features of the dependent claims.

The invention will now be further described with reference to the accompanying diagrammatic drawings in which:

Figure 1     is a horizontal cross-section through a twin screw extruder,

Figure 2     is a cross-section view of the twin screw extruder of Figure 1 along the line II-II,

Figure 3     is a graphical representation of the results obtained in a comparison between apparatus embodying the invention and a conventional twin screw mixer showing the amount of free acid against moisture content, and

Figure 4     is a graphical representation as in Figure 3 showing hardness against moisture content.

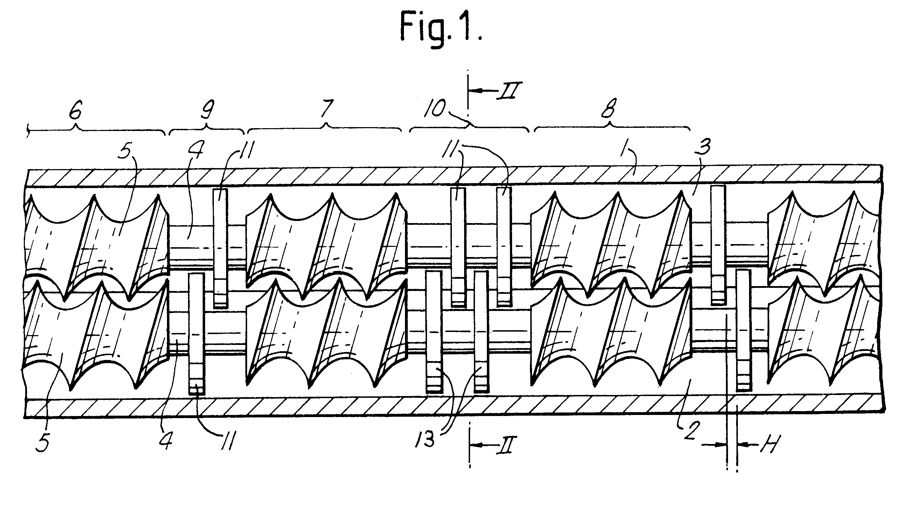

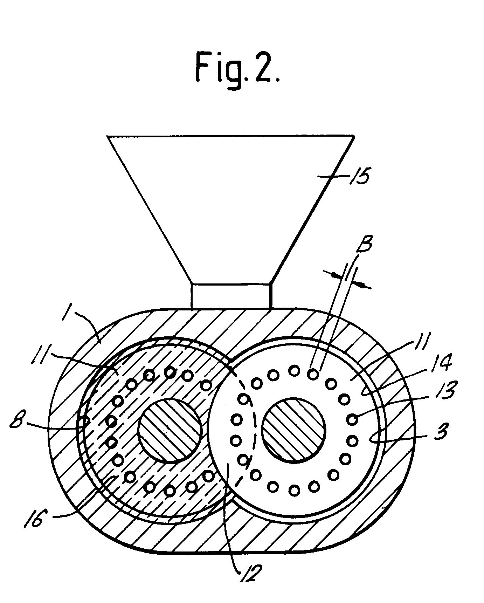

As shown in Figures 1 and 2 a section of a twin screw extruder comprises a casing 1 having two parallel cylindrical bores 2 and 3 which overlap. Rotatably mounted within each bore is a rotor shaft 4 carrying conveying elements 5 in the form of screw elements which form conveying sections 6, 7 and 8 of the extruder. Between the conveying sections are mixing section 9 and 10 comprising disc shaped mixing elements 11 secured to the rotor shafts. The elements 11 of one shaft overlap the elements of the other shaft in the area 12 as seen in Figure 2 and the elements are spaced along respective shafts so that the elements on one shaft alternate with the elements on the other shaft. A small axial gap H is provided between adjacent elements at the area of overlap.

Each of the elements 11 is provided with a plurality of apertures 13 disposed entirely within the circumference of the elements so as to leave a continuous periphery 14 to the elements. The apertures extend completely through the elements so that the length of the apertures L corresponds to the thickness of the elements in the axial direction of the shafts. The circumferential dimension B of the apertures as shown in Figure 2 is the maximum width of the aperture in the circumferential direction of the elements.

Powder materials are fed to the extruder via a feed hopper 15 communicating with an inlet opening into the casing 1 whereas liquids are pumped into the extruder via injection pipes (not shown) which pass through the casing 1 at appropriate positions. An outlet, not shown, is provided at the opposite end of the casing through which the mixed materials are extruded as a continuous bar.

The mixing elements 11 are dimensioned to leave a minimal clearance between the elements and the bores 2 and 3 of the casing 1.

Whilst the mixing elements have been shown as forming the mixing section or sections of a twin screw conveying extruder they could equally be contained in a casing through which the materials to be mixed are pumped by any suitable pump such as a piston pump or a gear pump.

In use the rotor shafts are rotatably driven and material to be mixed is fed through the hopper 15 and injection pipes and is conveyed by the screw elements towards the mixing section 9. The screw elements themselves effect a degree of mixing by the application of shear forces on the material as it is conveyed.

In the mixing section a body of material fills the hatched area 16 as shown in Figure 2, which area is only part of an annulus. The material in the hatched area is therefore impeded from rotating freely with the mixing elements since it cannot readily pass through the narrow gap H between adjacent elements. Thus the material in the hatched area adjacent the faces of the elements 11 is subjected to shear by contact therewith. If the material has Newtonian flow characteristics the shear may be uniform through the thickness of material. If the material undergoes non-Newtonian flow the shear will occur mostly in the vicinity of the moving faces of the elements. In either case the level of shear adjacent the side faces of the elements will be at least as great as elsewhere and greatest at the distance furthest from the axis of rotation of the elements, ie near the bore of the casing.

To flow through the mixing section the material passes primarily through the apertures 13, the object being to exert high shear on the material as it enters and leaves the apertures by virtue of the rotation of the apertures relative to the body of material occupying the hatched areas 16. Unless a slug of material is formed within the apertures such that at least a part of the slug is not affected by the shear conditions prevailing at the faces of the elements this high shear is not exerted on the material entering and leaving

5

the apertures. For this reason the length/circumferential dimension ratio of the apertures is designed to be at least equal to 0.03 times the Reynolds number of the material being mixed.

The apertures also effect considerable distributive mixing of the material by moving quantities of material within the overall bulk and, most importantly, ensuring that material is moved from areas of relatively low shear near the axis of rotation of a shaft to areas of relatively high shear further away from the axis of rotation of the shaft. To this end it should be noted that material leaving one element in a first disc in the overlapping area will transfer to the apertures of the adjacent disc and that this transfer has the effect of reversing the orientation of the slug of material to bring that material which was nearest the axis of rotation in the first aperture to a position further from the axis of rotation in the second aperture.

All these effects have been found to contribute to more effective mixing of viscous materials. The apparatus is designed so that the pressure drop for flow through the apertures is less than for flow transversely through the gaps H at the overlap between the elements, or between the elements and the bores of the casing, so that the flow is predominantly through the apertures 13. Specifically, the sizes of the elements and the apertures and the spacing between alternate elements are chosen so that the flow $Q_a$ through the apertures is substantially greater than the flows $Q_t$ and $Q_1$ as determined according to the above mentioned equations.

To facilitate variations in the axial spacing of the elements the elements can be slidably and non-rotatably mounted on the rotor shafts with spacers therebetween, the use of different spacers enabling the axial position of the elements on the shaft to be varied.

Particularly with a viscous material the number of mixing elements comprising a mixer or mixing section of an extruder may be only one or two elements on each shaft since, otherwise, the pressure drop across the mixer becomes excessive. A screw extruder may be much longer than shown in Figure 1 with a number of conveying sections interspersed by non-conveying mixer sections and in all forms of the invention there may be means for temperature control, ie heating or cooling, of the material being mixed eg ducts in the casing for circulation of heating or cooling fluid medium.

The process and apparatus of the present invention was used for the mixing and neutralising of the ingredients of a built non-soap detergent bar and compared to that prepared using the apparatus disclosed in USA 3 497 912 and also mixing elements having apertures with various length/circumferential diameter ratios.

Example 1

The preparation of the mixture (dough) for non-soap detergent bars was carried out on a Werner & Pfleiderer co-rotating twin screw extruder with kneading blocks as shown in US Patent 3 497 912.

The materials supplied were, in parts by weight:

| alkyl benzene sulphonic acid | 29 |
| water | variable |
| sodium pyrophosphate | 14 |
| sodium carbonate | 12 |
| calcite | 30 |
| bentonite | 3 |
| sodium sulphate | 4 |
| sodium carboxy methyl cellulose | 2 |

The twin screw extruder used was a Werner & Pfleiderer ZSK 57. It had overlapping twin bores with centres spaced 48 mm apart, as shown in Fig. 2, and each of the bores was 57 mm arranged in two stages at right angles to one another. In the first stage the screw arrangements were:-

| Description | Quantity | Length (mm) |
|---|---|---|
| 60mm Pitch Screw | 6 | 330 |
| Sealing Element | 1 | 40 |
| Kneading Block | 2 | 40 |
| 40mm Pitch Screw | 2 | 80 |
| Kneading Block | 4 | 80 |
| 40mm Pitch Screw | 2 | 80 |
| Kneading Block | 2 | 40 |
| 40mm Pitch Screw | 1 | 40 |
| Kneading Block | 2 | 40 |
| 80mm Pitch Screw | 1 | 105 |

TOTAL = 875

In the second stage the screw arrangement was of screw elements only.

The various ingredients were introduced into the extruder through feed hoppers as shown in Fig. 2 or injection pipes (not shown). The feed pipes for detergent acid and sodium carbonate were separated by a mixing section. Thus the neutralisation of the acid took place in the mixer.

A number of runs were carried out varying the amount of water included. The throughput was between 60 and 70 kg per hour with the shafts of the first stage rotating at 240 to 250 r.p.m. and the second stage screws rotating at 60 r.p.m.

When possible the resulting dough was extruded in bars whose hardness was tested by observing the penetration of a 9° cone weighted with a weight of 100 gm applied to the bar for 10 seconds.

The dough's content of moisture and free sulphonic acid was determined by analysis.

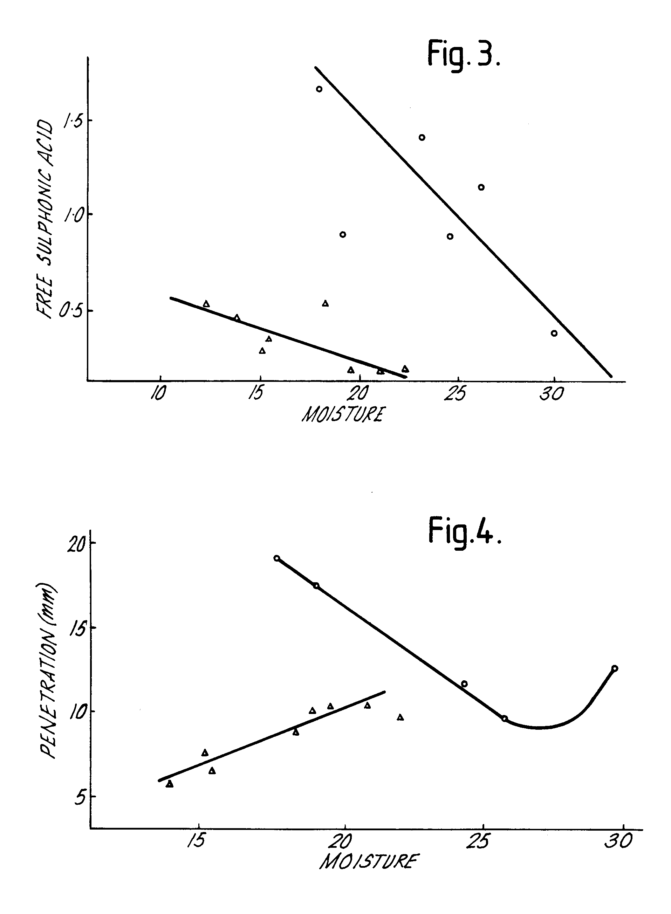

The results are shown in Figs. 3 & 4. Both are graphs in which the results in the Example 1 are plotted as circles.

Example 2

The twin screw extruder of Example 1 was modified by replacing the screw arrangements of the first stage with the following arrangement:

| Description | Quantity | Length (mm) |
|---|---|---|
| 60 mm Pitch Screw | 5 | 300 |
| Sealing Element | 1 | 15 |
| 60mm Pitch Screw | 1 | 60 |
| Perforated Disc | 1 | 15 |
| 60mm Pitch Screw | 2 | 120 |
| Perforated Disc | 2 | 30 |
| 60mm Pitch Screw | 1 | 60 |
| Perforated Disc | 1 | 15 |
| 60mm Pitch Screw | 1 | 60 |
| Perforated Disc | 2 | 30 |
| 60mm Pitch Screw | 1 | 60 |
| Perforated Disc | 2 | 30 |
| 80mm Pitch Screw | 1 | 80 |

**TOTAL = 875**

The perforated discs were as shown in Figs. 1 & 2. The clearance between the discs and barrel was about 0.5 mm. The discs were 4 mm thick and each gap H between adjacent discs was about 3 mm in the axial direction. Each disc had 18 apertures, each 5 mm. diameter equally spaced as shown in Figs. 1 & 2. Thus the ratio of the length/circumferential dimension of the apertures fulfilled the forementioned equation for fully developed flow in the apertures when the constitents being mixed have a Reynolds number of 27 or below. Following the equations provided above, the flow through the apertures was about 90% of the total flow through the mixer.

As in Example 1, a number of runs were carried out, varying the amount of water included and, when possible, the resulting the dough was extruded into bars. The hardness of the bars and the dough's moisture and free sulphonic acid content were determined as before and the results are shown in Figs. 3 & 4, in which the results of Example 2 are plotted as triangles.

Fig. 3 is a plot of free sulphonic acid content (as parts by weight per hundred parts by weight of the detergent active in the dough) against moisture content (as parts by weight per hundred parts by weight of the detergent active in the dough). In each example the amount of free sulphonic acid remaining is dependent on the moisture content. The levels of moisture needed are too high for water to be a simple catalyst so it is evident that the extent of completion of the neutralisation process is dependent upon the effectiveness of mixing. As can be seen, the apparatus and process of the invention enabled a lower level of free acid to be achieved with less water present. That less water was present gave rise to markedly better bar hardness as is shown by Fig. 4, which is a plot of penetration against moisture content (expressed as parts by weight per hundred parts by weight of the detergent active in the dough). Even at comparative moisture contents the hardness of a bar made according to the present invention exhibits increased hardness as compared to that of Example 1.

**Claims**

1. A process of mixing material in which the material is passed through a housing (1) closely fitting a plurality of circular mixing elements (11) arranged in interengaging and overlapping relationship on two driven parallel rotor shafts (4), each of the mixing elements (11) having openings (13) therethrough, the material passing through the housing (1) in the longitudinal direction of the shafts (4) with the majority of the material passing through the openings (13) characterised in that the openings (13) comprise apertures within which a slug of material is formed by the passage of the material therethrough, at least

8

EP 0 293 234 B1

part of which slug is not affected by the shear conditions existing at the faces of the elements (11).

2. A process according to Claim 1 characterised in that the apertures (13) are formed by holes having a length (L) to circumferential dimension (B) ratio at least equal to 0.03 times the Reynolds number of the material.

3. A process according to Claim 1 or Claim 2 characterised in that the material has a Reynolds number of less than 300.

4. A process according to Claim 1 characterised in that the material comprises at least a non-soap detergent active in acid form and a neutralising agent which are mixed to have less than 0.7 parts free acid and less than 22 parts moisture per 100 parts of detergent active.

5. A process according to Claim 4 in which the materials added to the mixer comprise less than 22 parts water per 100 parts detergent active.

6. A process for carrying out a chemical reaction including a step wherein at least two reactants are supplied to a mixer characterised in that they are mixed by the process according to any of Claims 1 to 3.

7. A process according to Claim 6 characterised in that the reactants are added together and start to react before entry to the mixer.

8. A non-conveying mixer for mixing viscous materials or materials which become viscous on processing, comprising a casing (1) having an inlet (15) and an outlet, the casing defining two parallel overlapping bores (2,3), a driven rotor shaft (4) co-axial with each bore, each rotor being provided with a plurality of circular elements (11) axially spaced along the shaft and closely surrounded by the bores of the casing, the elements (11) on one shaft (4) alternating with the elements (11) on the other shaft (4) with an axial gap (H) between adjacent faces of overlapping elements, each of the elements (11) having a plurality of apertures (13) extending axially therethrough forming the principal flow path through the mixer from the inlet to the outlet, characterised in that the apertures (13) in each of the elements (11) are spaced from the periphery of the elements (11) and have a length (L)/circumferential dimension (B) ratio of between 0.5 and 9.

9. A mixer according to Claim 8 characterised in that the rotors (4) are provided with conveying elements (5) upstream of the mixing elements (11).

10. A mixer according to Claim 9 characterised in that the rotors (4) are provided with alternate series of conveying elements (5) and mixing elements (11).

11. A mixer according to any one of Claims 8 to 10 characterised in that the rotors (4) are arranged to be driven in the same direction.

## Patentansprüche

1. Verfahren zum Mischen von Material, bei dem das Material durch ein Gehäuse (1) hindurchgeleitet wird, in das eine Mehrzahl von kreisförmigen Mischerelementen (11) in naher Anordnung eingepaßt sind, die ineinandergreifend und sich überlappend auf zwei angetriebenen parallelen Rotorwellen (4) sitzen und durch die jeweils Öffnungen (13) hindurchverlaufen, wobei das Material durch das Gehäuse (1) in der Längsrichtung der Wellen (4) hindurchtritt und der Großteil des Materials durch die Öffnungen (13) hindurchtritt, dadurch gekennzeichnet, daß die Öffnungen (13) Fenster umfassen, innerhalb derer durch den Durchtritt des Materials durch die Fenster eine Mengeneinheit des Materials gebildet wird, von der wenigstens ein Teil nicht den Scherungsbedingungen, die an den Flächen des Elements (11) herrschen, unterworfen ist.

2. Verfahren nach Anspruch 1, dadurch gekennzeichnet, daß die Fenster (13) durch Löcher gebildet sind, deren Verhältnis der Länge (L) zur Umlaufdimension (B) wenigstens gleich dem 0,03-fachen der Reynold'schen Zahl des Materials ist.

9

**3.** Verfahren nach Anspruch 1 oder 2, dadurch gekennzeichnet, daß das Material eine Reynold'sche Zahl unter 300 hat.

**4.** Verfahren nach Anspruch 1, dadurch gekennzeichnet, daß das Material wenigstens ein nicht-Seifen aktives Detergens in saurer Form und ein Neutralisierungsmittel umfaßt, die so gemischt werden, daß sie weniger als 0,7 Teile freie Säure und weniger als 22 Teile Feuchtigkeit pro 100 Teilen aktiven Detergens aufweisen.

**5.** Verfahren nach Anspruch 4, bei dem die dem Mischer beigefügten Materialien weniger als 22 Teile Wasser je 100 Teilen aktiven Detergens enthalten.

**6.** Verfahren zum Durchführen einer chemischen Reaktion einschließlich eines Schrittes, bei dem wenigstens zwei Reaktionsstoffe einem Mischer eingegeben werden, dadurch gekennzeichnet, daß sie durch das Verfahren nach einem der Ansprüche 1 bis 3 gemischt werden.

**7.** Verfahren nach Anspruch 6, dadurch gekennzeichnet, daß die Reaktionsstoffe zusammengegeben werden und mit ihrer Reaktion vor dem Eintritt in den Mischer beginnen.

**8.** Nicht-fördernder Mischer zum Mischen viskoser Materialien oder von Materialien, die bei der Verarbeitung viskos werden, mit einem Gehäuse (1), das einen Einlaß (15) und einen Auslaß aufweist und das zwei parallele sich überlappende Bohrungen (2, 3) begrenzt, und einer angetriebenen Rotorwelle (4), die sich koaxial in jeder der Bohrungen befindet, wobei jeder Rotor mit einer Mehrzahl von kreisförmigen Elementen (11) ausgestattet ist, die mit axialem Abstand entlang der Welle angeordnet und von den Bohrungen des Gehäuses mit kleinem Abstand umgeben sind, und wobei sich die auf einer der Wellen (4) sitzenden Elemente (11) mit den auf der anderen Welle (4) sitzenden Elementen (11) mit einem axialen Spalt (H) zwischen benachbarten Flächen der überlappenden Elemente abwechseln und jedes der Elemente (11) eine Mehrzahl von Fenstern (13) aufweist, die sich axial durch das Element hindurcherstrecken und den wesentlichen Strömungsweg durch den Mischer vom Einlaß zum Auslaß bilden, dadurch gekennzeichnet, daß die Fenster (13) in jedem der Elemente (11) von der Peripherie des Elements (11) einen Abstand aufweisen und ein Verhältnis Länge (L)/Umlaufdimension (B) zwischen 0,5 und 9 aufweisen.

**9.** Mischer nach Anspruch 8, dadurch gekennzeichnet, daß die Rotoren (4) strömungsoberhalb der Mischerelemente (11) mit Förderelementen (5) versehen sind.

**10.** Mischer nach Anspruch 9, dadurch gekennzeichnet, daß die Rotoren (4) mit einander abwechselnden Serien von Förderelementen (5) und Mischerelementen (11) versehen sind.

**11.** Mischer nach einem der Ansprüche 8 bis 10, dadurch gekennzeichnet, daß die Rotoren (4) für einen Antrieb im gleichen Drehsinn angeordnet sind.

**Revendications**

**1.** Procédé de mélange de matériau dans lequel le matériau passe à travers un corps (1) étroitement ajusté sur plusieurs éléments mélangeurs circulaires (11) disposés en relation d'engagement réciproque et d'imbrication sur deux arbres de rotor parallèles entraînés (4), chacun des éléments mélangeurs (11) étant trvaersé par des orifices (13), le matériau traversant le logement (1) dans la direction longitudinale des arbres (4), la plus grande partie du matériau passant à travers les orifices (13), tandis qu'un cylindre de matériau est formé par le passage du matériau dans celles-ci, au moins une partie de ce cylindre n'étant pas affectée par les conditions de cisaillement existant sur les faces des éléments (11).

**2.** Procédé selon la revendication 1, caractérisé en ce que les orifices (13) sont formés par des trous ayant un rapport de longueur (L) à la dimension de la circonférence (a) au moins égal à 0,03 fois le nombre de Reynolds du matériau.

**3.** Procédé selon la revendication 1 ou la revendication 2, caractérisé en ce que le matériau a un nombre de Reynolds inférieur à 300.

**4.** Procédé selon la revendication 1, caractérisé en ce que le matériau comporte au moins un détergent actif non savonneux sous forme acide et un détergent neutralisant qui sont mélangés pour avoir moins de 0,7 partis d'acide libre et moins de 22 parties d'humidité pour 100 parties de détergent actif.

**5.** Procédé selon la revendication 4, dans lequel les matériaux ajoutés au mélangeur contiennent moins de 22 parties d'eau pour 100 parties de détergent actif.

**6.** Procédé pour effectuer une réaction chimique comprenant une phase dans laquelle au moins deux produits de réaction sont fournis à un mélangeur, caractérisé en ce qu'ils sont mélangés par le procédé selon l'une des revendications 1 à 3.

**7.** Procédé selon la rendication 6, caractérisé en ce que les éléments réactifs sont ajoutés ensemble et font démarrer la réaction avant l'entrée dans le mélangeur.

**8.** Mélangeur non transporteur pour mélanger des matériaux visqueux ou des matériaux qui deviennent visqueux lors du traitement, comprenant un corps (1) ayant une entrée (15) et une sortie, le corps définissant deux alésages parallèles se recouvrant (2, 3), un arbre de rotor entraîné (4) coaxial avec chaque alésage, chaque rotor étant muni de plusieurs éléments circulaires (11) espacés axialement le long de l'arbre et entourés de près par les alésages du corps, les éléments (11) sur un arbre (4) alternant avec les éléments (11) sur l'autre arbre (4) avec un intervalle axial (H) entre les faces voisines des éléments imbriqués, chacun des éléments (11) ayant plusieurs orifices (13) qui les traversent axialement pour former le chemin d'écoulement principal à travers le mélangeur de l'entrée à la sortie, caractérisé en ce que les orifices (13) de chacun des éléments (11) sont écartés de la Périphérie de l'élément (11) et ont un rapport (L)/dimension de la circonférence (B) compris entre 0,5 et 9.

**9.** Mélangeur selon la revendication 8, caractérisé en ce que les rotors (4) sont munis d'éléments transporteurs (5) en amont des éléments mélangeurs (11).

**10.** Mélangeur selon la revendication 9, caractérisé en ce que les rotors (4) sont munis de séries alternées d'éléments transporteurs (5) et d'éléments mélangeurs (11).

**11.** Mélangeur selon une des revendications 8 à 10, caractérisé en ce que les rotors (4) sont disposés pour être entraînés dans le même sens.

Fig.1.

# Fig.2.

# Fig. 3.

# Fig. 4.